# EUROPÄISCHE PATENTSCHRIFT

(11) **EP 3 937 141 B1**
(45) Veröffentlichungstag und Bekanntmachung des Hinweises auf die Patenterteilung: **03.01.2024**
(21) Anmeldenummer: 21184591.2
(22) Anmeldetag: 08.07.2021
(51) Int. Cl.: G06Q 20/20, G06Q 10/087, G07F 9/02, G07F 17/00, G07G 1/00

(54) **VORRICHTUNG ZUR ERKENNUNG UND AUSGABE VON WAREN**
DEVICE FOR DETECTING AND OUTPUTTING GOODS
DISPOSITIF DE DÉTECTION ET DE DISTRIBUTION DES MARCHANDISES

(30) Priorität: 08.07.2020 DE 102020117998
(43) Veröffentlichungstag der Anmeldung: 12.01.2022
(73) Patentinhaber: Livello GmbH, 40221 Düsseldorf (DE)
(72) Erfinder: Eissing, Alexander, 40219 Düsseldorf (DE)
(74) Vertreter: Herrmann, Uwe

(56) Entgegenhaltungen:
- US-A1- 2003 164 754
- US-A1- 2007 069 867
- US-A1- 2016 283 898
- US-B1- 10 318 917

## Beschreibung

Die vorliegende Erfindung betrifft eine Vorrichtung zur Erkennung und Verkauf von Waren, insbesondere in Form eines Schranks und / oder Kühl- und / oder Gefriergeräts.

Der Versuch, rund um die Uhr gesundes Essen mittels Verkaufsautomaten (auch "Vending machines") bereitzustellen, scheitert in den meisten Fällen daran, dass herkömmliche Verkaufsvorrichtungen meist sehr schwer, unpraktisch, und nicht fähig sind, Verpackungen in unterschiedlichen Formaten zuverlässig auszugeben. Da derartige Verkaufsvorrichtungen meist viele mechanische Teile, aufweisen, sind sie oft wartungsintensiv, fehleranfällig, außerdem begrenzt und aufwendig, wenn es darum geht, Produkte nachzufüllen oder zu bestücken (insbesondere, wenn Spiralen zum Halten der Produkte eingesetzt werden). Aus der Druckschrift US2003/0164754A1 ist eine Vorrichtung bekannt, mittels welcher die Lagerzeit von Gütern überwachbar ist. Die Druckschrift US2016/0283898A1 offenbart ein Inventurmanagementsystem. Zudem ist aus der US2007/0069867A1 ein Inventursystem bekannt.

Der vorliegenden Erfindung liegt die Aufgabe zugrunde, die Probleme des Stands der Technik abzumildern oder gar ganz zu beseitigen. Konkret liegt der vorliegenden Erfindung die Aufgabe zugrunde, eine Verkaufsvorrichtung bereitzustellen, welche weniger wartungsintensiv, benutzerfreundlicher und intelligenter ist.

Die vorliegende Erfindung bietet die Möglichkeit, in einer intelligenten Verkaufsvorrichtung, beispielsweise einem Schrank, autonom und automatisch Produkte zu erkennen, zu verkaufen oder zu vermieten.

Insbesondere soll die vorliegende Erfindung eine Verkaufsvorrichtung speziell für frische Lebensmittel und Verpackungen in unterschiedlichen Formen bereitstellen, die ein Kunde vor dem eigentlichen Kaufvorgang entnehmen und näher betrachten kann um sich von der Qualität des Produktes zu überzeugen. Der Kunde bekommt kein Produkt vorgelegt, sondern kann sich frei entscheiden, kann einzelne Produkte entnehmen, begutachten und auch wieder zurückstellen. Weiterhin soll die Verkaufsvorrichtung vorzugsweise einfach und schnell zu befüllen sein und keine Spiralen zum Halten von Produkten umfassen.

Beispielsweise kann eine erfindungsgemäße Verkaufsvorrichtung oder Verkaufsstation selbstständig den eigenen Inhalt (insbesondere Waren, bevorzugt individuelle Warenobjekte) erkennen und vorzugsweise weiterhin erfassen, wann die Vorrichtung zuletzt von wem befüllt wurde, Bedarfs-Analysen auf der Grundlage beispielsweise der entnommenen Waren oder der Verfallsdaten der Waren erstellen und gegebenenfalls automatisch neue und oder andere Waren nachbestellen.

Aktuell ist bei herkömmlichen Verkaufsvorrichtungen das Sortiment, dass dem Kunden zur Verfügung steht, durch die Auswahl des die jeweilige Verkaufsvorrichtung betreibenden Einzelhändlers limitiert. Beispielsweise kann eine erfindungsgemäße Verkaufsvorrichtung ein Standort- und Kundengruppen orientiertes Sortiment ermöglichen, dass innerhalb von kurzer Zeit, bspw. durch einen Kundenwunsch, geändert werden kann.

Hierfür kann beispielsweise von Kunden mittels einer mobilen Software Applikation bzw. App oder einer Eingabeeinheit wie z.B. einem Touchscreen am Gerät eine Bestellung für eine bestimmte Verkaufsvorrichtung getätigt werden. Beispielsweise umfasst eine erfindungsgemäße Verkaufsvorrichtung eine Steuervorrichtung, welche dazu ausgelegt ist, mit einer App zu interagieren und auf der Grundlage einer Eingabe oder Bestellung eines Benutzers in der App (z.B. zwei Gläser Joghurt in die Verkaufsvorrichtung in der Meierstr.) eine entsprechende Bestellung zur Bestückung der Verkaufsvorrichtung auszugeben.

Eine erfindungsgemäße Verkaufsvorrichtung ermöglicht vorzugsweise ein Echtzeit-Sortimentsmanagement und das Ausliefern von Bestellungen und / oder Paketen, die der Kunde bspw. im Internet vorbestellt hat. Dadurch wird eine Sortimentsbreite wie im Onlinehandel ermöglicht.

Es ist anzumerken, dass die Vorrichtung gemäß der vorliegenden Erfindung nicht auf das Verkaufen von Waren beschränkt ist, sondern zum Vermieten und allgemein zum Bereitstellen von Objekten im weitesten Sinne eingesetzt werden kann.

Eine erfindungsgemäße Vorrichtung zum Verkauf von Waren weist eine Aufnahme für Waren und eine Anzahl von Sensoren auf, welche mindestens eine in der Aufnahme für Waren befindliche Ware erfassen und identifizieren, vorzugsweise anhand einer Integration von Daten betreffend das Gewicht der Ware sowie optische Eigenschaften der Ware, wobei die Vorrichtung dazu ausgelegt ist, eine Bewegung und / oder Entnahme der mindestens eine Ware durch einen Benutzer automatisch zu erfassen.

Beispielsweise sind Bildgebungsmittel vorgesehen, welche durch eine automatische Bildanalyse (auch "Computer Vision") erkennen, welche Ware bzw. was für Objekte sich im Sichtfeld der Bildgebungsmittel befinden. Als Bildgebungsmittel können Kameras zum Einsatz kommen. Die optischen Eigenschaften der Ware sind beispielsweise die Form, Farbe oder Beschriftung der Ware.

Erfindungsgemäß weist die Vorrichtung mindestens einen Sensor auf, welcher dazu ausgelegt ist, Gewichtsänderungen auf einer Auflagefläche, auf welcher die mindestens eine Ware aufliegt, zu erfassen, und die Vorrichtung weist weiterhin eine Auswerteeinheit auf, welche dazu ausgelegt ist, ein kumuliertes Gesamtgewicht aus den erfassten positiven und negativen Gewichtsänderungen auf der Auflagefläche zu ermitteln.

Vorzugsweise sind an / in der Auflagefläche mehrere Sensoren (Gewichtssensoren), welche dazu ausgelegt sind, Gewichtsänderungen auf der Auflagefläche zu erfassen, vorgesehen. Die Auflagefläche kann beispielsweise ein Auflageboden in einem Regal, Schrank oder Kühl- und / oder Gefriergerät sein. Vorzugsweise sind pro Auflageboden mindestens vier, vorzugsweise mehr als vier Gewichtssensoren vorhanden.

Die Gewichtssensoren erzeugen zeitliche Folgen von Gewichtsvektoren und die Auswerteeinheit erstellt basierend auf diesen Daten mathematische Ableitungen und Umformungen. Aus der Kombination der Messdaten der Gewichtsensoren werden vorzugsweise von der Auswerteeinheit zeitliche Folgen von zweidimensionalen Koordinaten erzeugt. Durch die Berücksichtigung der zweidimensionalen Koordinaten können Rückschlüsse auf das Bewegen und Verändern der Position eines oder mehrerer Produkte oder Gegenstände in der Verkaufsvorrichtung gezogen werden. Anhand dieser Koordinaten können auf einer Auflagefläche mindestens ein aber vor allem mehrere unterschiedliche Produkte oder Gegenstände gleichzeitig angeboten werden.

Herkömmliche Wiegesysteme ermitteln das absolute Gewicht als physikalischen Messwert an einem oder mehreren Sensoren. Eine erfindungsgemäße Vorrichtung verfolgt jede Änderung auf der Auflagefläche / Wiegefläche mittels der Gewichtssensoren und ermittelt mittels der Auswerteeinheit ein kumuliertes Gewicht aus allen negativen und positiven Gewichtsänderungen. Dadurch muss die erfindungsgemäße Vorrichtung bzw. deren Wiegesystem nicht nachkalibriert werden, da es sich automatisch kalibriert.

Das ist wichtig, da die Wiegesysteme, insbesondere bei Verkaufsvorrichtungen mit Kühl- und / oder Gefrierfunktion, Temperaturschwankungen ausgesetzt sind, die die Wiegesysteme beeinflussen. Das erfindungsgemäße Wiegesystem erzeugt ein digitales Pseudo-Absolutgewicht und eliminiert somit die Messfehler einer absoluten Gewichtsmessung.

Es hat sich in der Praxis als vorteilhaft herausgestellt, wenn die Vorrichtung eine Mehrzahl an Sensoren aufweist, welche dazu ausgelegt sind, Gewichtsänderungen auf der Auflagefläche zu erfassen und die Auswerteeinheit dazu ausgelegt ist, zeitliche Veränderungen der erfassten Gewichtsänderungen zu ermitteln.

Durch die Berücksichtigung der zeitlichen Komponente der Gewichtsänderungen kann beispielsweise unterschieden werden, ob ein Benutzer eine Ware auf der Auflagefläche bewegt oder aus der Verkaufsvorrichtung entnimmt. Beispielsweise kann erfasst werden, wie lange ein Benutzer ein zu kühlendes Produkt zur Betrachtung entnimmt, bevor er / sie es wieder in die Vorrichtung zurückstellt. Dies erlaubt Rückschlüsse auf die Haltbarkeit des Produkts bzw. der Ware.

Vorzugsweise weist eine erfindungsgemäße Vorrichtung zur Erfassung der optischen Eigenschaften der Ware ein oder mehrere Bildgebungsmittel auf, wobei die Auswerteeinheit dazu ausgelegt ist, vorzugsweise mittels einer automatischen Bildanalyse, aus den von den Bildgebungsmitteln erfassten Daten mindestens eines der folgenden Merkmale zu extrahieren: Begrenzungsrahmen-Vektor einer Ware, geometrische Objektkoordinaten einer Ware, Zuordnung zu einer geometrischen Klasse, Wahrscheinlichkeit der Zugehörigkeit zu einer Warenklasse, Farbe der Ware, Erfassung von Text auf der Ware durch automatische Texterkennung, Anzahl gleicher Objekte im Betrachtungsfeld des Bildgebungsmittels, Anwesenheit oder Abwesenheit von Objekten im Betrachtungsfeld des Bildgebungsmittels, Bewegungsvektoren im Betrachtungsfeld des Bildgebungsmittels.

Ein Begrenzungsrahmen-Vektor bezeichnet hierbei vorzugsweise einen Bewegungsvektor eines Produkts bzw. einer Ware. Um die Erfassung der Ware bzw. des Produkts zu erleichtern, wird vorzugsweise nur deren Begrenzungsrahmen betrachtet und weitere Informationen, z.B. bezüglich der farblichen Ausgestaltung der Oberfläche der Ware, werden nicht berücksichtigt.

Vorzugsweise ist die Auswerteeinheit einer erfindungsgemäßen Vorrichtung dazu ausgelegt, zeitliche Folgen oder Veränderungen der erfassten optischen Eigenschaften zu ermitteln.

Eine erfindungsgemäße Vorrichtung umfasst eine Auswerteeinheit, wobei die Auswerteeinheit dazu ausgelegt ist, verschiedene Sensordaten betreffend eine Ware, insbesondere mindestens einen erfassten Gewichtswert mindestens eines Gewichtssensors, zweidimensionale Koordinaten einer Gewichtserkennung, Ableitungen eines erfassten Gewichtswerts eines Gewichtssensors, zeitliche Koordinaten, zweidimensionale Koordinaten eines Bildgebungsmittels, eine Klassenzugehörigkeitswahrscheinlichkeit einer bestimmten Ware oder ein Begrenzungsrahmen-Vektor einer bestimmten Ware miteinander zu einem Sensorfusionsobjekt zu verknüpfen, welches eine eindeutige Identifizierung einer individuellen Ware erlaubt.

In anderen Worten erzeugt die Auswerteeinheit mittels Gewichts-, Kraft- und Kamerasensoren eine Folge von zeitabhängigen lokalisierten Entitätsvektoren bzw. eine bestimmte Ware betreffenden Daten, in einem beschränkten Raum, beispielsweise auf einem bestimmten Ablageboden in der Verkaufsvorrichtung. Die Folge beschreibt eindeutig eine Ware bzw. eine Entität.

Die Integration der Sensordaten ermöglicht eine eindeutige Identifizierung einer Ware auf der Grundlage einer 3D-Gewichtssensorik (4+ Wägezellen erkennen das Gewicht, Position, Bewegung und Anzahl der Produkte) und einer automatischen Bildanalyse bzw. Computer Vision (erkennt eine Ware durch Farbe, Form, Codes und Schrift auf dem Produkt bzw. der Ware).

Durch eine Kombination und einen Abgleich der Daten zu verschiedenen Zeitpunkten kann erkannt werden, welches Produkt zu der Vorrichtung hinzugefügt, bewegt oder aus dieser entnommen worden ist, die Anzahl der Produkte, die über einander gestapelt worden sind, kann bestimmt werden und es kann auch z.B. die Geschmacksrichtung des Produkts (trotz gleichem Gewicht/ gleicher Position, anhand Farbe) erkannt werden, etc.

Eine jede Ware ist anhand des zugehörigen Sensorfusionsobjekts jederzeit eindeutig und individuell bestimmbar und kann einer bestimmten Warenklasse oder Produktgruppe zugeordnet werden (bspw. Lebensmittel-Produktgruppe: Müsliriegel, Smoothie; oder IT-Verbrauchsgüter: USB-Stick, Maus; oder Montagematerial: Schraubenpaket, Dübelpaket).

Auf der Grundlage der Erfassung der jeweiligen individuellen Waren kann für eine jede Warenklasse bzw. Produktgruppe eine Aussage über den Bestand, die Verfügbarkeit, die Gültigkeit, Entnahme, Gebrauchsfähigkeit, Rückgabe, Ansicht oder die Berührung von Waren in der Verkaufsvorrichtung oder einem Teilbereich davon getroffen werden.

Die Auswerteeinheit erzeugt in anderen Worten im Rahmen der Fusion bzw. Integration von Sensordaten eine gesamte Folge von zeitabhängigen mehrdimensionalen Sensordaten mit unter anderem folgenden aber nicht ausschließlichen Attributen:
- Gewichtswert Sensor 1 ... N (z. B. für die Sensoren 1-10)
- Zweidimensionale Koordinaten aus der Gewichtserkennung
- Ableitungen des Gewichtswerts von Sensor 1 ... N (z.B. für die Sensoren 1-10) bzw. mindestens eine Abbleitung
- Zeit
- Zweidimensionale Koordinaten von Kamerasensor 1 ... N (z.B. für die Bildgebungsmittel bzw. Kameras 1-10)
- Klassenzugehörigkeits-Wahrscheinlichkeit Objekt 1 ... N (z.B. für die Objekte bzw. Waren 1-10)
- Begrenzungsrahmen-Vektor (z.B. für die Objekte bzw. Waren 1-10)

Vorzugsweise werden sämtliche derart ermittelten zeitabhängigen Folgen durch die Auswerteeinheit miteinander synchronisiert und zu einem Sensorfusionsobjekt von multidimensionalen Merkmalsbeschreibungen verknüpft.

Dieses Sensorfusionsobjekt wird zu unterschiedlichen Zeitpunkten in einem Speicher der erfindungsgemäßen Vorrichtung abgelegt. Somit kann eine jede Ware lückenlos überwacht und das Ergebnis entsprechend dokumentiert werden.

Es hat sich hierbei in der Praxis als vorteilhaft herausgestellt, dass die Verknüpfung der Sensordaten zu einem Sensorfusionsobjekt erfindungsgemäß in Echtzeit erfolgt.

Es besteht erfindungsgemäß gar keine oder nur eine minimale Verzögerung zwischen der Erfassung der Daten durch die Sensoren und der Verarbeitung der Daten zu einem Sensorfusionsobjekt.

Gemäß einem weiteren Aspekt der Erfindung ist die Auswerteeinheit weiterhin dazu ausgelegt, einem einer bestimmten Ware zugehörigen Sensorfusionsobjekt mindestens ein individuelles Attribut der bestimmten Ware, insbesondere ein Mindesthaltbarkeits- oder Verfalldatum oder eine Verknüpfung zu einem Bestellvorgang oder Reservierungsvorgang, zuzuordnen.

In herkömmlichen Enterprise-Ressource-Planning-Systemen (ERP) werden Produkte meist nicht als einzelne individuelle Waren oder Produkte betrachtet, sondern häufig lediglich als Mengen einer Produktgruppe betrachtet. Häufig werden Produktgruppen Seriennummern oder Chargennummern zugeordnet und serialisiert gespeichert. Bei einer erfindungsgemäßen Vorrichtung wird jedes einzelne Produkt bzw. jede einzelne Ware als einzelne individuelle Entität verwaltet und kann dadurch individuelle Attribute besitzen. Diese Entität ist einem digitalen Zwilling gleichzusetzen. Ein einfaches Attribut ist beispielsweise das Verfallsdatum, eine kompliziertere Verknüpfung kann beispielsweise in einer Zuordnung zwischen einem Kunden und einem Produkt (beispielsweise die Zuordnung zu einer Vorbestellung oder die Bevorzugung eines Kunden, weil ein bestimmtes Produkt ein Wunschprodukt ist) abgebildet werden.

Ein anderer Aspekt der vorliegenden Erfindung betrifft eine Vorrichtung mit mindestens einer Auflagefläche für Waren, wobei in oder an der Auflagefläche für Waren eine Sensorik zur dreidimensionalen Erfassung von Gewichtsänderungen auf der Auflagefläche vorgesehen ist und weiterhin Bildgebungsmittel zu Erfassung der optischen Eigenschaften der Waren vorgesehen sind, deren Betrachtungsbereich von einem oberen Bereich der Vorrichtung hin zu einem unteren Bereich der Vorrichtung ausgerichtet ist und vorzugsweise weiterhin Temperatursensoren, welche die Umgebungstemperatur der Waren erfassen, sowie weiterhin vorzugsweise ein RFID-Empfänger vorgesehen ist, mittels dessen mit RFID-Sendern ausgestattete Waren erkennbar sind.

Beispielsweise umfasst eine erfindungsgemäße Vorrichtung mehrere Auflageböden, auf welchen Waren platziert werden können. In einem jedem Auflageboden sind mehrere Gewichtssensoren angeordnet. An der Unterseite eines bei einer Betrachtung durch einen Benutzer über einem jeweiligen Auflageboden angeordneten Auflageboden ist vorzugsweise ein Bildgebungsmittel in Form einer oder mehrerer Kameras angeordnet, welches die auf dem jeweiligen Auflageboden angeordneten Waren aufzeichnet.

Vorzugsweise wird die Umgebungstemperatur in einem Innenraum der Vorrichtung, welcher die Waren ausgesetzt sind, mittels Temperatursensoren erfasst. Wie beispielsweise ein zulässiger Temperaturbereich für eine vorbestimmte Zeit unter- oder überschritten, sodass negative Auswirkungen auf die Qualität der Waren zu erwarten sind, so kann beispielsweise mittels einer entsprechend konfigurierten Steuervorrichtung der Verkaufsvorrichtung ein Alarm bzw. eine Anzeige ausgegeben werden und / oder automatisch neue Waren nachbestellt werden, um die verdorbenen Waren zu ersetzen.

Eine erfindungsgemäße Verkaufsvorrichtung ist in anderen Worten ein intelligentes Anbietungssystem, welches dazu ausgelegt ist, in der Vorrichtung befindliche stationäre Waren selbständig zu erkennen, verfolgen, verwalten, vertreiben und zu vermieten.

Die erfindungsgemäße Vorrichtung ermöglicht es, Benutzer und Waren zu identifizieren und zuzuordnen, z.B. um zu erkennen welcher Nutzer welche Ware wann entnommen oder zurückgelegt hat.

Durch Echtzeit-Warenbestandverwaltung und Fullfillment-Planung, welche vorzugsweise von einer entsprechend konfigurierten Steuervorrichtung der Verkaufsvorrichtung ausgeführt werden, kann eine stetige Verfügbarkeit von Waren gewährleistet werden und der entsprechende Produktionsbedarf an Waren bestimmt werden, um die zeitliche und mengenmäßigen Materialbewegung zu optimieren.

Eine erfindungsgemäße Vorrichtung kann eignet sich für den autonomen Abverkauf von Lebensmitteln und anderen Produkten.

Beispielhafte Ausgestaltungen einer erfindungsgemäßen Vorrichtung sind z.B. als Schrank, Truhe, Kühl-und /oder Gefriergerät oder als Regal oder Regalsystem. Eine erfindungsgemäße Vorrichtung kann beispielsweise als Mini-Kantine, Abholstation, Inventarmanagement-System oder als Smart-Store mit einer 24/7-Verfügbarkeit eingesetzt werden.

Der Zugang zu Waren in einer erfindungsgemäßen Vorrichtung ist vorzugsweise nach der erfolgten Freischaltung eines Benutzers durch ein beispielsweise an der Vorrichtung montiertes EMV Karten/NFC-Lesegerät, einen Touchscreen oder eine sonstige Eingabeeinheit und / oder alle gängigen Formen des Cashless-Payment (Kredit-, Girokarte), per App, wie auch Mitarbeiter-NFC-Karten möglich.

Eine erfindungsgemäße Vorrichtung umfasst vorzugsweise eine entsprechende Eingabeeinheit, mittels welcher ein Benutzer den Zugang zu den Waren freischalten kann. Beispielsweise wird nach einer Authentifizierung über eine App oder durch das Einführen einer Kreditkarte in ein Lesegerät der erfindungsgemäßen Vorrichtung der Zugriff des Benutzers zu den Waren, beispielsweise durch Entriegeln eines Türschlosses der Vorrichtung, freigeschaltet.

Alternativ oder zusätzlich kann die Vorrichtung ein Bildgebungsmittel zur Personenerkennung aufweisen. Nähert sich in diesem Fall ein Benutzer der Vorrichtung, so wird der Benutzer vorzugsweise durch automatische Bildanalyse identifiziert und der Zugang zu den Waren entsprechend freigeschaltet.

Durch den Einsatz der beschriebenen Fusion von Sensordaten registriert eine erfindungsgemäße Vorrichtung vorzugsweise die Entnahme von Produkten in Echtzeit, den Verkaufswert bzw. Preis der entnommen Ware und den Regalbestand.

Nach Beenden des Kaufvorgangs werden aus der erfindungsgemäßen Vorrichtung entnommene Produkte dem Kunden vorzugsweise mittels einer einsprechend konfigurierten Steuervorrichtung der Vorrichtung automatisch berechnet und dem ERP zur Erfassung / Dokumentation und gegebenenfalls zur Nachbestellung der Ware mitgeteilt. Das Inventar erfindungsgemäßen Vorrichtung wird vorzugsweise ständig überwacht und bei Bedarf wird automatisch nachbestellt.

Weiterhin ermöglicht eine erfindungsgemäße Vorrichtung vorzugsweise ein digitalisiertes und nachhaltiges Lieferkettenzyklus-Management für Lebensmittel und Mehrwegverpackungen durch RFID-Technologie.

Beispielsweise werden Mehrweg-Behälter für Waren (aus Kunststoff, Glas, Porzellan) mit Spülmaschinen- und Mikrowellenfesten RFID Tags ausgestattet, um sie kontaktlos, zu jedem Zeitpunkt in der Lieferkette mit entsprechenden in der erfindungsgemäßen Vorrichtung verbauten RFID Empfängern bzw. Antennen zu identifizieren und lokalisieren und / oder um z.B. das Haltbarkeitsdatum und weitere Produkt-Informationen abzurufen.

Beim Kauf einer Ware und der Entnahme der Ware aus der erfindungsgemäßen Vorrichtung wird mittels einer entsprechend konfigurierten Steuervorrichtung der Verkaufsvorrichtung dem Kunden ein Pfand für die Entnahme des Mehrweg-Behälters mitberechnet.

Nach der Rückgabe des Mehrweg-Behälters der erfindungsgemäßen Vorrichtung wird der Mehrweg-Behälter mittels der RFID-Antennen identifiziert und dem Kunden das Pfandgeld zurückerstattet.

Nach der Rückgabe des Mehrweg-Behälters wird dieser gereinigt und beim Befüllen mit frischer Ware bekommt das RFID-Tag des Mehrweg-Behälters eine neue Produkt-Zuweisung, z.B. "Hühnersuppe" anstatt "Reis".

Um die Umweltfreundlichkeit weiter zu erhöhen, kann vorzugsweise in einem System mehrerer erfindungsgemäßer Verkaufsvorrichtungen mittels einer Steuervorrichtung oder App der Bestand an bald ablaufenden Produkten / Waren erfasst werden und vorzugsweise eine Transportroute ermittelt werden, um Produkte, die bald ablaufen, zu "poolen" und diese von einem Standort mit einer niedrigen Abverkaufquote zu einem Standort mit einer höheren Verkaufschance zu transportieren. So wird unnötige Lebensmittelverschwendung verhindert.

Weiterhin kann eine erfindungsgemäße Vorrichtung eine Ausgabeeinheit aufweisen, mittels welcher beispielsweise Hinweise an Kunden ausgegeben werden können. Falls ein Kunde z.B. ein nicht mehr haltbares oder riskantes Produkt an einer erfindungsgemäßen Verkaufsvorrichtung kaufen will, bekommt dieser eine Audio/Visuelle Warnung bei der Entnahme des Produktes. Alternativ kann die Verkaufsvorrichtung auch vorzugsweise automatisch abgeschlossen werden, bis alle abgelaufenen Produkte entnommen worden sind.

Weiterhin kann eine erfindungsgemäße Vorrichtung in den folgenden Anwendungsfällen zum Einsatz kommen:
Als Smart-Display für das Präsentieren, verwalten und verkaufen von Produkten auf einem "Display" bzw. Aufsteller oder offenen Regal im Einzelhandel. Eine derartige erfindungsgemäße Vorrichtung ist beispielsweise dazu ausgelegt, den Warenbestand des Regals, Bewegungen der Waren, Besucher des Displays, die Conversion Rate des Displays zu erfassen sowie die Position des Displays zu erfassen, etc.

Als Smart-Minibar für Hotels und Hospitality. Die erfindungsgemäße Vorrichtung teilt vorzugsweise automatisch den genauen Verbrauch dem Hotel Management zur Abrechnung mit und informiert das Personal, welche Produkte nachgefüllt werden müssen.

Weiterhin kann auch im Hotelbereich eine erfindungsgemäße Vorrichtung zum Einsatz kommen, welche Gästen Produkte kostenlos zum Testen anbietet - z.B. Hairspray, Creme oder Deo. Wenn das Produkt zu über 50% aufgebraucht oder mitgenommen wird (was durch die Sensoren der Vorrichtung automatisch erfasst wird), wird es dem Hotelgast berechnet.

Als Asset Management Unit zur Verwaltung von Verbrauchsgegenständen in der Produktion und in Werkstätten, z.B. von Schrauben, Nägeln, etc. Es kann mittels einer erfindungsgemäßen Vorrichtung erkannt werden, welcher Mitarbeiter was, wann entnommen hat und ob er es wieder zurückgebracht hat

Als Smart Medical Cabinet - Für die Kontrolle und Überwachung von Medikamenten und medizinischen Werkzeugen in einer Klinik, Krankenhaus, Praxen, Apotheken, etc.

Als Never-Ending-Shelf - Für die Gewährleistung, dass immer genug Produkte in offenen Regalen zur Verfügung stehen und das die richtigen Produkte rechtzeitig am richtigen Ort wieder nachgefüllt werden - z.B: für Schreibwaren und Büro-Bedarf

Als autonomer Mikroladen - Ein kleiner Laden, in dem Kunden sich frei bewegen können, um Produkte einzukaufen. Beim Eingang muss jeder Kunde sich über die zu der Vorrichtung gehörenden App oder Mobile Payment verifizieren. Entnommene Waren werden automatisch erfasst und dem Kunden in Rechnung gestellt.

Ein weiterer Aspekt der Erfindung betrifft einen intelligenten Auflageboden, welcher mit mindestens einem Gewichtssensor zur Erfassung von Gewichtsänderungen, sowie mit mindestens einem Bildgebungsmittel zur Überwachung von Waren ausgestattet ist.

Mittels eines derartigen Auflagebodens oder einer Mehrzahl von derartigen Auflageböden (z.B. im Rahmen eines intelligenten Regalsystems) kann eine bestehende Verkaufsvorrichtung, beispielsweise ein Kühlschrank oder Verkaufsregal, im Sinne der vorliegenden Erfindung nachgerüstet werden.

Beispielsweise könnte zur Nachrüstung bestehender Vorrichtungen ein Satz Auflageböden (oder Einlegeböden oder Auflageflächen für Waren im weitesten Sinne), welche jeweils mit Bildgebungsmitteln (z.B. Kameras) und / oder Leuchtmitteln (z.B. LEDs) und / oder Gewichtssensoren (z.B. Wägezellen) und / oder Temperatursensoren und / oder RFID/NFC-Modulen ausgestattet sind, bereitgestellt werden.

Vorzugsweise weist ein erfindungsgemäßer Auflageboden eine Gewichtssensorik (zur 3D-Erfassung von Gewichtsveränderungen auf einer Auflagefläche), Bildgebungsmittel inklusive automatischer Bildanalyse (welche vorzugsweise auf die Waren auf einem in der Verkaufsvorrichtung darunter angeordneten Auflageboden gerichtet sind- also vorzugsweise an der Unterseite des Auflagebodens entgegengesetzt zu dessen Warenauflagefläche angeordnet sind), RFID-Module, Temperatursensoren und / oder Leuchtmittel (insbesondere LED-Module) auf.

Ein Satz Auflageböden zur Nachrüstung einer bestehenden Vorrichtung könnte beispielsweise mehrere gleichartige Auflageböden oder auch Auflageböden unterschiedlicher Ausgestaltung mit mindestens einer Komponente ausgewählt aus einer Gewichtssensorik (zur 3D-Erfassung von Gewichtsveränderungen auf einer Auflagefläche), Bildgebungsmittel inklusive automatischer Bildanalyse (welche vorzugsweise auf die Waren auf einem in der Verkaufsvorrichtung darunter angeordneten Auflageboden gerichtet sind- also vorzugsweise an der Unterseite des Auflagebodens entgegengesetzt zu dessen Warenauflagefläche angeordnet sind), RFID-Module, Temperatursensoren und / oder Leuchtmittel (insbesondere LED-Module) aufweisen.

Derartig ausgestattete Auflageböden sind für die automatisierte Produkterkennung für jedes Produkt einsetzbar. Vorzugsweise sind die die einzelnen Auflageböden dazu ausgelegt, in einer Vorrichtung modular angebracht und verschoben werden.

Ein derartiges intelligentes Regalsystem ermöglicht ein schnelles Reagieren auf Kundenwünsche, insbesondere durch ein schnelles Verstellen / Verschieben der Auflageböden. Durch die modulare Ausbildung der Auflageböden kann ein erfindungsgemäßer Auflageboden mit verschiedenen Typen von Verkaufsvorrichtungen eingesetzt werden.

Vorzugsweise führt der mindestens eine intelligente erfindungsgemäße Auflageboden oder das System derartiger Auflageböden (intelligentes Regalsystem) mittels einer entsprechend konfigurierten Auswerteeinheit die vorstehend beschriebene Verknüpfung der Sensordaten zu einem Sensorfusionsobjekt durch.

Weitere Vorteile, Merkmale und Effekte der vorliegenden Erfindung ergeben sich aus der nachstehenden Beschreibung bevorzugter Ausführungsformen unter Bezugnahme auf die zugehörigen Zeichnungen, in denen gleiche oder ähnliche Bauteile durch dieselben Bezugszeichen bezeichnet sind. Hierbei zeigt:
Fig. 1 eine Ansicht einer erfindungsgemäßen Verkaufsvorrichtung;
Fig. 2 eine Ansicht einer anderen erfindungsgemäßen Verkaufsvorrichtung;
Fig. 3 eine Perspektivansicht der erfindungsgemäßen Verkaufsvorrichtung aus Fig. 2.

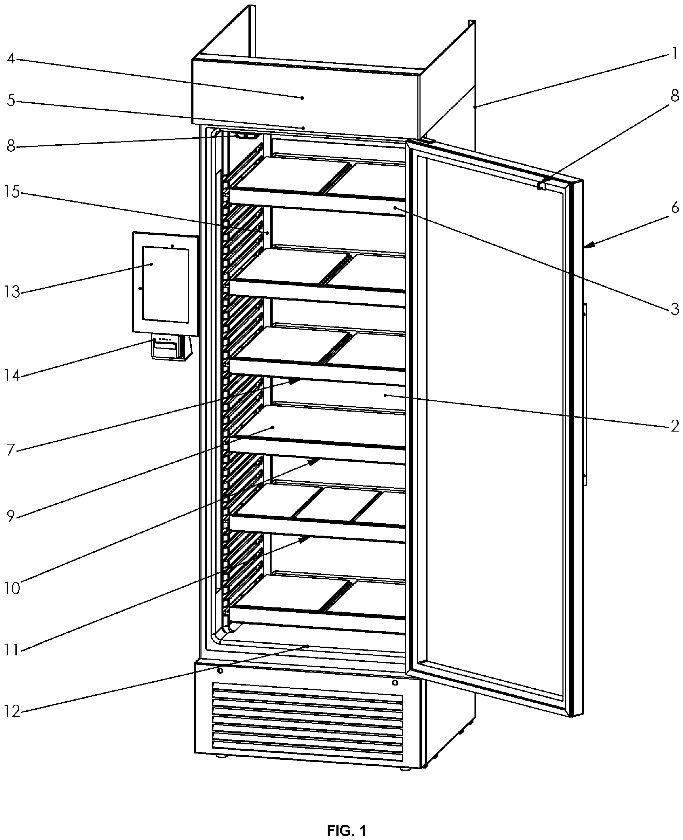

Die in Fig. 1 gezeigte erfindungsgemäßen Verkaufsvorrichtung ist in Form eines Schranks, insbesondere in Form eines Kühlschranks 1 ausgebildet. Der Kühlschrank 1 umfasst einen Innenraum 2 zur Aufnahme von Waren, welcher mittels Einlegeböden bzw. Auflageböden 3 in mehrere Teilbereiche aufgeteilt ist. Auf den Auflageböden 3 können jeweils Waren platziert werden. Die Auflageböden 3 sind in dem Innenraum 2 flexibel angeordnet und können beliebig positioniert werden, vorzugsweise weist die Innenwand des Innenraums 2 hierfür Rillen oder andere Haltemittel auf, in welche die Auflageböden eingeschoben oder aufgelegt werden können.

An einem oberen Ende weist der Kühlschrank 1 eine Anzeigevorrichtung 4 auf, beispielsweise in Form eines Displays oder einer Leuchtanzeige. Hier kann beispielsweise ein Logo eines Betreibers angezeigt werden oder beispielsweise der Inhalt des Kühlschranks 1 (z.B. "Getränke" oder "Essen") angegeben werden.

Weiterhin ist am oberen Ende des Kühlschranks 5 ein Bildgebungsmittel bzw. eine Kamera 5 zur Personenerkennung vorgesehen. Beispielsweise kann mittels einer automatischen Bildanalyse mittels der Kamera 5 eine sich dem Kühlschrank 1 nähernde Person identifiziert werden. Daraufhin kann beispielsweise das elektronische Türschloss 8 der Tür 6, vorzugsweise Glastür, des Kühlschranks 1 entriegelt werden oder die LED- Beleuchtung 7 neben einer diesem Kunden zugehörigen Ware auf einem der Auflageböden 3 kann aktiviert werden, um den Kunden auf die zugehörige Ware hinzuweisen.

Die Leuchtmittel, vorzugsweise LEDs 7, sind in dieser Ausführungsform jeweils an der Unterseite eines jeden Auflagebodens 3 angeordnet und strahlen auf einem Auflageboden 3 darunter befindliche Waren von oben an. Alternativ oder zusätzlich können die Leuchtmittel auch als Lichtband oder Lichtpunkte ausgestaltet sein und sind an den Innenwand des Innenraums 2 oder entlang / auf den Auflageböden 3 erstrecken. Es können mehrfarbige LEDs vorgesehen sein.

In den Auflageböden 3 sind jeweils Wägeflächen 9 mit Gewichtssensoren verbaut. Auf den Wägeflächen 9 werden waren platziert. In dieser Ausführungsform weist ein jeder Auflageboden 3 zwei Wägeflächen 9 auf. Vorzugsweise sind die Gewichtssensoren unter den Wägeflächen 9 verbaut und erfassen Gewichtsänderungen auf der Wägeflächen, woraus ein kumuliertes Gesamtgewicht auf der jeweiligen Wägefläche 9 ermittelt wird. Vorzugswesie sind pro Wägefläche 9 mindestens 4 Gewichtssensoren / Wägezellen vorgesehen.

Weiterhin sind Bildgebungsmittel 10 zur Erfassung optischer Eigenschaften der Waren, vorzugsweise Kameras, in dieser Ausführungsform jeweils an der Unterseite eines jeden Auflagebodens 3 angeordnet und zeichnen auf einem Auflageboden 3 darunter befindliche Waren von oben auf.
Alternativ oder zusätzlich können auch Kameras an der Innenwand des Innenraums 2 angeordnet sein.

Vorzugsweise sind die Kameras zur Warenüberwachung sowie die Gewichtssensoren und auch die Kameras zur Personenüberwachung derart gesteuert, dass sie erst aktiviert werden, wenn eine Bewegung im entsprechenden Überwachungsbereich des jeweiligen Sensors erfasst wird. So kann der Stromverbrauch minimiert werden.

In dieser Ausführungsform sind jeweils an der Unterseite der Auflageböden 3 RFID-Antennen 11 vorgesehen, mittels welcher einzelne mit RFID-Tags ausgestattete Waren, identifiziert werden können. Alternativ oder zusätzlich können RFID-Antennen 11 auch an der Innenwand des Innenraums 2 angeordnet sein.

Die Temperatur im Innenraum 2 wird in dieser Ausführungsform mittels Temperatursensoren 12 überwacht, welche zumindest am unteren Ende des Innenraums 2 angeordnet sind. Die Temperatursensoren können an beliebigen Stellen im Innenraum 2 platziert sein und beispielsweise an / in der Innenwand oder an / in den Auflageböden 3 vorgesehen sein. Die Temperatursensoren 12 können teil eines Temperaturregelkreises sein.

Weiterhin weist der Kühlschrank 1 eine Eingabe- und Ausgabeeinheit 13 auf, welche beispielsweise ein Bildschirm oder Touchscreen ist. Mittels der Eingabe- und Ausgabeeinheit 13 kann sich beispielsweise ein Benutzer durch Eingabe eines Codes identifizieren, eine Warenauswahl eingeben, einen Bestellungscode eingeben etc. Zusätzlich kann mittels der Eingabe- und Ausgabeeinheit 13 ein Attribut einer bestimmten Ware, z.B. das Verfallsdatum, "bio" oder"nicht-bio" etc. angezeigt werden. Auch Warnhinweise können ausgegeben werden.

Die Eingabe- und Ausgabeeinheit 13 kann auch dazu ausgelegt sein, im Rahmen eines mobilen oder kontaktlosen Bezahlsystems beispielsweise mit dem Smartphone eines Benutzers zu interagieren.

Alternativ oder zusätzlich kann auch ein Kartenlesegerät (EMV / NFC) 14 vorgesehen sein, welches beispielsweise Kredit- oder EC-Karten oder sonstige Karten lesen kann. Auch wäre es denkbar, dass das Kartenlesegerät 14 Zugangskarten verschiedener Mitarbeiter einer Firma erkennt und den Kühlschrank 1 entsprechend der jeweiligen Authorisierung entsprechend freischaltet.

In dieser Ausführungsform sind für die Elektronik des Kühlschranks 1 benötigte Kabel hinter einer Kabelleiste 15 verdeckt und im Innenraum 2 angeordnet.

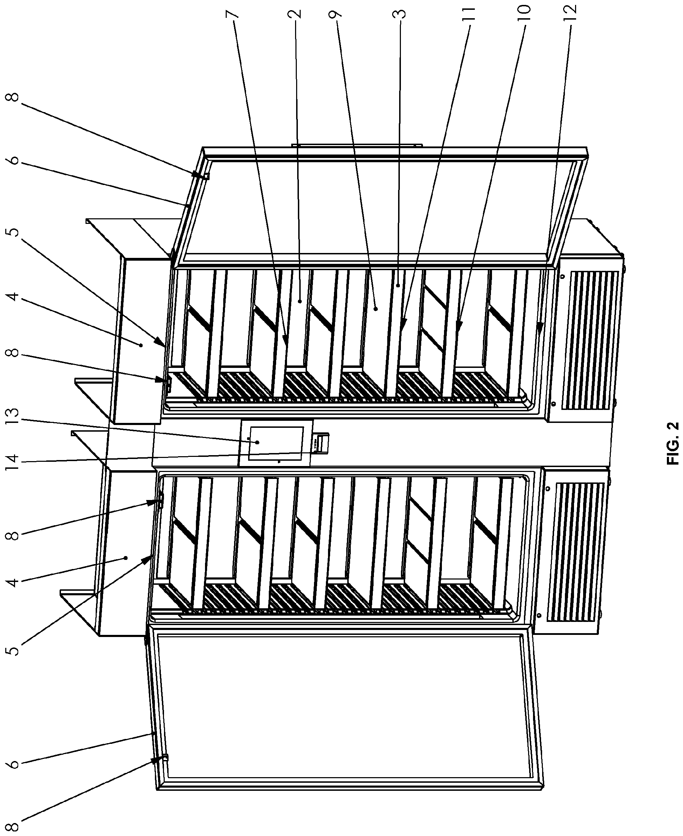

Fig. 2 zeigt eine andere Ausführungsform der Erfindung, in welcher die Vorrichtung als Doppelschrank ausgeführt ist. Beispielsweise können zwei Kühlschränke oder auch ein Kühl- und ein Gefrierschrank miteinander kombiniert sein.

Auch in dieser Ausführungsform sind die Auflageböden 3 modular und flexibel in dem Innenraum 2 anordnenbar. Die Innenwand eines jeden Innenraums 2 weist hierfür Rillen oder andere Haltemittel auf, in welche die Auflageböden eingeschoben oder aufgelegt werden können.

Mittels der Auflageböden 3, welche die vorstehend beschriebenen Gewichtsensoren und Bildgebungsmittel zur Warenüberwachung aufweisen, können bestehende Vorrichtungen, z.B. Kühlschränke, nachgerüstet werden. Hierfür werden die vorstehend beschriebenen Auflageböden 3 in dem Innenraum eines bestehenden herkömmlichen Kühlschranks (oder einer sonstigen Vorrichtung, beispielsweise einem Regalsystem) angeordnet.

Bei der in Fig. 2 gezeigten Ausführungsform kann beispielsweise auf dem einen Kühlschrank mittels der Anzeigevorrichtungen 4 der Inhalt des Kühlschranks als "Getränke" und der Inhalt des anderen Kühlschranks als "Essen" angegeben werden.

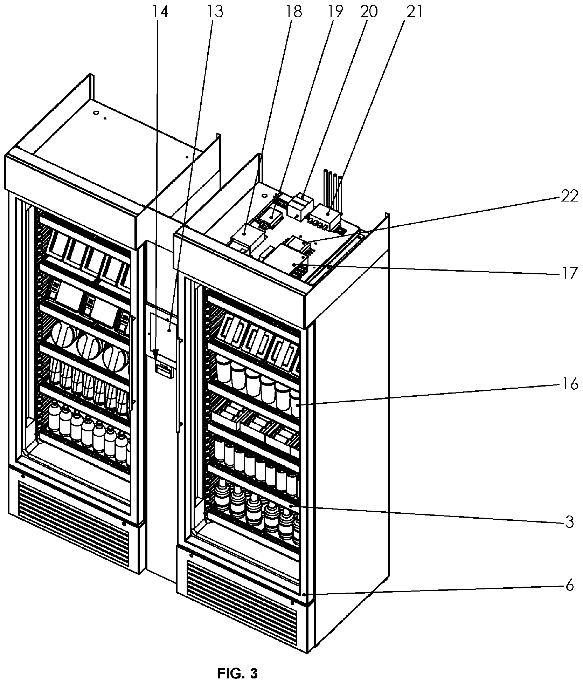

Fig. 3 zeigt eine Perspektiv Ansicht der Ausführungsform aus Fig. 2, in welcher die Auflageböden 3 mit Waren 16 bestückt sind. An dem oberen Ende sind in dieser Ansicht die elektronischen Komponenten des Kühlschranks 1 sichtbar.
So weist der Kühlschrank 1 eine Auswerteeinheit in Form eines Wägezellen-Lesers 17 auf, welche die von den Gewichtssensoren der Auflageböden 3 erfassten Messdaten auswertet.

Weiterhin weist der Kühlschrank 1 ein RFID-Lesegerät auf, welches die erfassten RFID-Signale verarbeitet. Eine Stromversorgung 19 versorgt den Kühlschrank 1 mit Strom.

Zudem weist der Kühlschrank 1 eine Steuervorrichtung 20 auf, welche dazu ausgelegt ist, den Kühlschrank vorzugsweise wie vorstehend beschreiben anzusteuern.

Mittels eines Router-Netzteils 21 kann der Kühlschrank 1 mit dem Internet verbunden werden. Weiterhin wäre auch eine Bluetooth-Schnittstelle zur Kommunikation denkbar. Weiterhin weist der Kühlschrank einen Computer oder Mikrocomputer auf, der zur Steuerung des Kühlschranks beiträgt.

## Patentansprüche

1. Vorrichtung zur Ausgabe von Waren (16), mit einer Aufnahme für Waren (16) und einer Anzahl von Sensoren, welche mindestens eine in der Aufnahme für Waren (16) befindliche Ware (16) erfassen und identifizieren, anhand einer Integration von Daten betreffend das Gewicht sowie optische Eigenschaften der Ware (16), wobei die Vorrichtung dazu ausgelegt ist, eine Bewegung und / oder Entnahme und / oder Befüllung der mindestens eine Ware (16) durch einen Benutzer automatisch zu erfassen und eine Auswerteeinheit aufweist, welche dazu ausgelegt ist, verschiedene Sensordaten betreffend eine Ware (16) miteinander zu einem Sensordatenfusionsobjekt zu verknüpfen, welches eine eindeutige Identifizierung der individuellen Ware (16) erlaubt, wobei die Verknüpfung der Sensordaten zu einem Sensordatenfusionsobjekt in Echtzeit erfolgt, wobei gar keine oder nur eine minimal Verzögerung zwischen der Erfassung der Daten durch die Sensoren und der Verarbeitung der Daten zu einem Sensorfusionsobjekt erfolgt, **dadurch gekennzeichnet, dass** die Vorrichtung mindestens einen Sensor aufweist, welcher dazu ausgelegt ist, Gewichtsänderungen und deren Koordinaten auf einer Auflagefläche, auf welcher die mindestens eine Ware (16) aufliegt, zu erfassen, und die Vorrichtung weiterhin eine Auswerteeinheit aufweist, welche dazu ausgelegt ist, ein kumuliertes Gesamtgewicht aus den erfassten positiven und negativen Gewichtsänderungen auf der Auflagefläche zu ermitteln.

2. Vorrichtung nach Anspruch 1, wobei die Vorrichtung eine Mehrzahl an Sensoren aufweist, welche dazu ausgelegt sind, Gewichtsänderungen auf der Auflagefläche zu erfassen und die Auswerteeinheit dazu ausgelegt ist, zeitliche Veränderungen der erfassten Gewichtsänderungen zu ermitteln.

3. Vorrichtung nach einem der vorhergehenden Ansprüche, wobei zur Erfassung der optischen Eigenschaften der Ware (16) ein oder mehrere Bildgebungsmittel (10) vorgesehen sind, wobei die Auswerteeinheit dazu ausgelegt ist, vorzugsweise mittels einer automatischen Bildanalyse, aus den von den Bildgebungsmitteln (10) erfassten Daten mindestens eines der folgenden Merkmale zu extrahieren: Begrenzungsrahmen-Vektor einer Ware (16), Objektkoordinaten einer Ware (16), Zuordnung zu einer geometrischen Klasse, Wahrscheinlichkeit der Zugehörigkeit zu einer Warenklasse, Farbe der Ware (16), Erfassung von Text auf der Ware (16) durch automatische Texterkennung, Anzahl gleicher Objekte im Betrachtungsfeld des Bildgebungsmittels (10), Anwesenheit oder Abwesenheit von Objekten im Betrachtungsfeld des Bildgebungsmittels (10), Bewegungsvektoren im Betrachtungsfeld des Bildgebungsmittels (10).

4. Vorrichtung nach Anspruch 3, wobei die Auswerteeinheit dazu ausgelegt ist, zeitliche Folgen oder Veränderungen der erfassten optischen Eigenschaften zu ermitteln.

5. Vorrichtung nach einem der vorhergehenden Ansprüche, wobei die Auswerteeinheit dazu ausgelegt ist, insbesondere einen erfassten Gewichtswert eines Gewichtssensors, Koordinaten einer Gewichtserkennung, mindestens eine Ableitung eines erfassten Gewichtswerts eines Gewichtssensors, zeitliche Koordinaten, Koordinaten eines Bildgebungsmittels (10), eine Klassenzugehörigkeitswahrscheinlichkeit einer bestimmten Ware (16) oder ein Begrenzungsrahmen-Vektor einer bestimmten Ware (16) miteinander zu dem Sensordatenfusionsobjekt zu verknüpfen, welches eine eindeutige Identifizierung einer individuellen Ware (16) erlaubt.

6. Vorrichtung nach Anspruch 5 oder 6, wobei die Auswerteeinheit weiterhin dazu ausgelegt ist, einem einer bestimmten Ware (16) zugehörigen Sensordatenfusionsobjekt mindestens ein individuelles Attribut der bestimmten Ware (16), insbesondere ein Mindesthaltbarkeits- oder Verfalldatum oder eine Verknüpfung zu einem Bestellvorgang oder Reservierungsvorgang, zuzuordnen.

7. Vorrichtung nach einem der vorhergehenden Ansprüche, wobei in oder an einer Auflagefläche für Waren eine Sensorik zur dreidimensionalen Erfassung von Gewichtsänderungen auf der Auflagefläche vorgesehen ist und dass Bildgebungsmittel zu Erfassung der optischen Eigenschaften der Waren vorgesehen sind, deren Betrachtungsbereich vorzugsweise von einem oberen Bereich der Vorrichtung hin zu einem unteren Bereich der Vorrichtung ausgerichtet ist und vorzugsweise weiterhin Temperatursensoren (12), welche die Umgebungstemperatur der Waren (16) erfassen, sowie weiterhin vorzugsweise ein RFID-Empfänger vorgesehen ist, mittels dessen mit RFID-Sendern ausgestattete Waren (16) erkennbar sind.

8. Auflageboden (3), auf welchen eine Ware (16) aufgelegt werden kann, mit mindestens einem Gewichtssensor zur Erfassung von Gewichtsänderungen und vorzugsweise deren Koordinaten, sowie mit mindestens einem Bildgebungsmittel (10) zur Überwachung von Waren (16) ausgestattet ist, wobei der Auflageboden (3) dazu ausgelegt ist, im Rahmen einer Vorrichtung nach einem der Ansprüche 1 bis 7 eingesetzt zu werden, wobei der Auflageboden (3) an einer Oberseite Gewichtssensoren und an einer Unterseite Bildgebungsmittel (10) aufweist und vorzugsweise weiterhin mit Leuchtmitteln, Temperatursensoren (12) und / oder RFID/NFC-Modulen ausgestattet ist.

9. Verwendung eines Auflagebodens (3) nach Anspruch 8 oder mehrerer Auflageböden (3) nach Anspruch 8 zur Nachrüstung einer bestehenden Vorrichtung zur Ausgabe von Waren (16) gemäß einem der Ansprüche 1 bis 7.

## Claims

1. Device for dispensing goods (16), with a receptacle for goods (16) and a number of sensors, which detect and identify at least one good (16) located in the receptacle based on an integration of data concerning the weight and optical properties of the good (16). The device is designed to automatically detect a movement and/or removal and/or filling of at least one good (16) by a user and has an evaluation unit, which is designed to link various sensor data concerning a good (16) to a sensor data fusion object, allowing a unique identification of the individual good (16). The linking of the sensor data to a sensor data fusion object occurs in real-time, with no or only minimal delay between the data capture by the sensors and the data processing into a sensor fusion object. **Characterized in that** the device has at least one sensor designed to detect weight changes and their coordinates on a support surface on which the at least one good (16) rests, and the device also has an evaluation unit designed to determine a cumulative total weight from the detected positive and negative weight changes on the support surface.

2. Device according to claim 1, where the device has multiple sensors designed to detect weight changes on the support surface, and the evaluation unit is designed to determine temporal changes of the detected weight changes.

3. Device according to one of the preceding claims, where for the detection of the optical properties of the good (16), one or more imaging means (10) are provided. The evaluation unit is designed to extract, preferably by automatic image analysis, at least one of the following features from the data captured by the imaging means (10): bounding box vector of a good (16), object coordinates of a good (16), assignment to a geometric class, probability of belonging to a goods class, color of the good (16), detection of text on the good (16) by automatic text recognition, number of identical objects in the field of view of the imaging means (10), presence or absence of objects in the field of view of the imaging means (10), motion vectors in the field of view of the imaging means (10).

4. Device according to claim 3, where the evaluation unit is designed to determine temporal sequences or changes of the detected optical properties.

5. Device according to one of the preceding claims, where the evaluation unit is designed to link, in particular, a detected weight value of a weight sensor, coordinates of a weight detection, at least one derivative of a detected weight value of a weight sensor, temporal coordinates, coordinates of an imaging means (10), a class membership probability of a specific good (16), or a bounding box vector of a specific good (16) to the sensor data fusion object, allowing a unique identification of an individual good (16).

6. Device according to claim 5 or 6, where the evaluation unit is further designed to assign at least one individual attribute of the specific good (16), in particular, a minimum shelf life or expiration date or a link to an order or reservation process, to a sensor data fusion object associated with a specific good (16).

7. Device according to one of the preceding claims, where in or on a support surface for goods, a sensor system for three-dimensional detection of weight changes on the support surface is provided, and imaging means for capturing the optical properties of the goods are provided, whose viewing area is preferably oriented from an upper area of the device towards a lower area of the device, and preferably also temperature sensors (12) which detect the ambient temperature of the goods (16), and also preferably an RFID receiver is provided, by means of which goods (16) equipped with RFID transmitters can be detected.

8. Support base (3), on which a good (16) can be placed, equipped with at least one weight sensor for detecting weight changes and preferably their coordinates, and with at least one imaging means (10) for monitoring goods (16). The support base (3) is designed to be used within a device according to one of the claims 1 to 7, wherein the support base (3) has weight sensors on the top and imaging means (10) on the bottom and is preferably also equipped with lighting means, temperature sensors (12), and/or RFID/NFC modules.

9. Use of a support base (3) according to claim 8 or several support bases (3) according to claim 8 for retrofitting an existing device for dispensing goods (16) according to one of the claims 1 to 7.

## Revendications

1. Dispositif de distribution de marchandises (16) comportant un logement pour les marchandises (16) et un certain nombre de capteurs qui détectent et identifient au moins une marchandise (16) se trouvant dans le logement pour les marchandises (16) à partir d'une intégration de données concernant le poids et les caractéristiques optiques de la marchandise (16). Le dispositif est conçu pour détecter automatiquement un mouvement et/ou le retrait et/ou le chargement de la ou des marchandises (16) par un utilisateur et comprend une unité d'évaluation conçue pour fusionner différentes données de capteurs concernant une marchandise (16) en un objet de fusion de données de capteurs permettant une identification unique de la marchandise individuelle (16). La fusion des données des capteurs en un objet de fusion de données de capteurs s'effectue en temps réel, sans délai ou avec un délai minimal entre la détection des données par les capteurs et le traitement des données en un objet de fusion de données de capteurs. Le dispositif comprend au moins un capteur conçu pour détecter les variations de poids et leurs coordonnées sur une surface de support sur laquelle repose la ou les marchandises (16), et le dispositif comprend en outre une unité d'évaluation conçue pour déterminer un poids total cumulatif à partir des variations de poids positives et négatives détectées sur la surface de support.

2. Dispositif selon la revendication 1, dans lequel le dispositif comprend une pluralité de capteurs conçus pour détecter les variations de poids sur la surface de support, et l'unité d'évaluation est conçue pour déterminer les variations temporelles des variations de poids détectées.

3. Dispositif selon l'une quelconque des revendications précédentes, dans lequel un ou plusieurs moyens d'imagerie (10) sont prévus pour la détection des caractéristiques optiques de la marchandise (16), et l'unité d'évaluation est conçue pour extraire au moins l'un des caractéristiques suivantes à partir des données captées par les moyens d'imagerie (10) préférablement par une analyse d'image automatique : vecteur de cadre de délimitation d'une marchandise (16), coordonnées de l'objet d'une marchandise (16), association à une classe géométrique, probabilité d'appartenance à une classe de marchandises, couleur de la marchandise (16), détection de texte sur la marchandise (16) par reconnaissance automatique de texte, nombre d'objets identiques dans le champ de vision des moyens d'imagerie (10), présence ou absence d'objets dans le champ de vision des moyens d'imagerie (10), vecteurs de mouvement dans le champ de vision des moyens d'imagerie (10).

4. Dispositif selon la revendication 3, dans lequel l'unité d'évaluation est conçue pour déterminer les séquences temporelles ou les variations des caractéristiques optiques détectées.

5. Dispositif selon l'une quelconque des revendications précédentes, dans lequel l'unité d'évaluation est conçue pour fusionner, en particulier, une valeur de poids détectée par un capteur de poids, des coordonnées de détection de poids, au moins une dérivée d'une valeur de poids détectée par un capteur de poids, des coordonnées temporelles, des coordonnées d'un moyen d'imagerie (10), une probabilité d'appartenance à une classe spécifique de marchandise (16), ou un vecteur de cadre de délimitation d'une marchandise (16) avec l'objet de fusion de données de capteurs permettant une identification unique d'une marchandise individuelle (16).

6. Dispositif selon la revendication 5 ou 6, dans lequel l'unité d'évaluation est également conçue pour attribuer à l'objet de fusion de données de capteurs associé à une marchandise spécifique (16) au moins un attribut individuel de la marchandise spécifique (16), en particulier une date de péremption ou de validité minimale, ou une association à un processus de commande ou de réservation.

7. Dispositif selon l'une quelconque des revendications précédentes, dans lequel une sensorique pour la détection tridimensionnelle des variations de poids sur la surface de support des marchandises est prévue dans ou sur une surface de support des marchandises, et des moyens d'imagerie pour la détection des caractéristiques optiques des marchandises sont prévus, dont la zone de vision est de préférence orientée d'une partie supérieure du dispositif à une partie inférieure du dispositif, et de préférence en outre des capteurs de température (12) qui détectent la température ambiante des marchandises (16), et de préférence un récepteur RFID (Radio-Frequency Identification) permettant de reconnaître les marchandises (16) équipées d'émetteurs RFID.

8. Plateau de support (3) sur lequel une marchandise (16) peut être placée, équipé d'au moins un capteur de poids pour la détection des variations de poids et de préférence de leurs coordonnées, ainsi que d'au moins un moyen d'imagerie (10) pour la surveillance des marchandises (16), le plateau de support (3) étant conçu pour être utilisé dans le cadre d'un dispositif selon l'une quelconque des revendications 1 à 7, le plateau de support (3) comporte des capteurs de poids sur le dessus et des moyens d'imagerie (10) sur le dessous, et de préférence également des sources lumineuses, des capteurs de température (12) et/ou des modules RFID/NFC (Near Field Communication).

9. Utilisation d'un plateau de support (3) selon la revendication 8 ou de plusieurs plateaux de support (3) selon la revendication
